# EUROPEAN PATENT APPLICATION

(11) **EP 2 915 652 A1**
(43) Date of publication of application: **09.09.2015**
(21) Application number: 14157519.1
(22) Date of filing: 03.03.2014
(51) Int. Cl.: B29C 47/76, B29C 47/40, B29C 47/10, B29B 17/02, B29C 47/08

(54) **Method and apparatus for producing masterbatch pellets from waste toner**

(71) Applicant: Ricoh Company, Ltd., Tokyo 104-8222 (JP)
(72) Inventor: Rahman, Sazidur, Tokyo 104-8222 (JP); Ball, Martin, Tokyo 104-8222 (JP); Weaver, Colin, Tokyo 104-8222 (JP); Yamaguchi, Hideyuki, Tokyo 104-8222 (JP)
(74) Representative: White, Duncan Rohan

(57) **Abstract**

A method of manufacturing a masterbatch comprising receiving a powder as a raw material including waste toner powder; feeding the powder to a vented-twin screw extruder( 22), having predominantly conveying zones between the feed port and the die; melting and extruding the powder to form an extrudate; pelletizing (23) the extrudate to the required pellet size.

## Description

### FIELD

The invention relates generally to the processing of waste toner and, more particularly, to the production of a masterbatch for use in colouring plastics and polymer materials.

### BACKGROUND

It is known that toner waste from the toner manufacturing process (toner plant waste), from used toner cartridges (supply waste), waste from bottle filling (filling waste), and market return toner from unused toner residue in toner bottles and machine waste or any other toner waste returned from the market (machine waste), is a serious problem for the industry. On top of the environmental concerns there is a large cost in disposing of waste toner for the manufacturer. Currently, either such waste is disposed of in land fill although mostly the waste is combined and subjected to a pyrolysis treatment to reduce the environmental impacts of disposal. There is still a large cost to the manufacturer.

It is, therefore, desirable to re-use the waste toner somehow. The main obstacle to use toner as masterbatch is the fine particle size of the toner powder. The particle size of toner varies between 5 and 15 micron. Handling this powder will require specialist equipment and training. For this reason most companies are not willing to take it in this form. Therefore to make a masterbatch suitable for a wide market the particles size has to be increased to a size greater then 1 mm, this will eliminate the fine powder handling issue and the product will be more widely acceptable.

A discussion of the manufacture of masterbatch using a prior art method is described in htt://www.leistritz.com/extrusion/de/00 pdf/MASTERBATCH GB 2013.pdf. In the described process up to 90% pigment is mixed with at least 10% of a raw polymer.

There are four basic types of masterbatch: Black, White, Colour and Functional. In the present application a reference to "colour" does not generally exclude black or white unless the context requires it.

One of the other purposes of adding black masterbatch (apart from if a black article is to be produced) is that adding carbon black to most plastics impacts a degree of UV light protection.

In the production of a black master batch, all of the components in the concentrate are combined/ mixed in one processing step. The process can be realized either via a premix setup (only one feeder above the main opening port) or via a split-feed setup, where each component is fed into the extruder by means of a feeder positioned above the main feed port and one or two side feeders.

For a colour master batch, single pigment concentrates are produced in the same manner as in the one-stage process. The first step is then followed by a second extrusion step that combines the required ratios of colourant and additive single pigment concentrate to create a masterbatch which is customized to the specifications of the customer.

A masterbatch may be used as colouring agents (Black, White or "colour") to colour various products/items, including furniture, building materials (for example flooring or roofing materials), bollards and other street furniture, buckets, baskets and other containers, trays and mats. In short if it can be made from plastic or polymer material then a masterbatch can be useful in colouring.

Recycling of printer toner powder has been explored in, for example, http://usrenewable.com/wastewatch.pdf, which discloses, the issues with waste toner in general, and the specific legislative issues. In this document, waste toner from four sources is mentioned, waste from manufacture, e.g. off-spec or contaminated powder, waste from cartridge manufacture, e.g. spillages and dust extractor residue, waste arising from spent toner cartridge manufacture including toner residue in spent cartridges and from refilling. The process described envisages an end product, of black master batch consisting entirely of recycled materials, with 50% toner powder, 30% recycled polymer, and 20% off specification carbon black. The process described involves four key stages, i) sieving of the waste toner to remove contaminants, ii) blending of waste toner with polymer pigment carrier and carbon black under high pressure to enable the three materials to combine, iii) extrusion and pelletisation into 1 mm pellets, cooling and sorting of pellets, irregular sized pellets being separated out and recycled, bagging of masterbatch. The document proposes some improvements to the extruding process to deal with slow throughput and delivery of the magnetic powder. No solution is proposed to the problems caused by the ingress of hot polymer. It would be desirable, therefore, not to have to add the polymer, which is standard in the masterbatch process and not to have to add carbon black.

WO-A-2003025046 relates to a process for producing a colouring agent (masterbatch) for colouring polymers, by mixing a plastics material, carbon black and waste print powder. The maximum proportion of waste print powder is preferably 50%.

The solution of WO-A-2003025046 proposes a rather large proportion of carbon black (>20%) and a low proportion of waste print powder. According to the disclosure an effective masterbatch can be prepared by the following preferred process:
1. The components are mixed loosely in a drum.
2. The components are transferred by a variable speed feeder at a defined rate to a mixer and grinder where they are mixed, ground and amalgamated.
3. The resulting materials exit the pre-mixer in a rope form which is then fed by a time-sequenced pusher device at a constant rate into an extruder.
4. The mixture is mixed and extruded as a series of strands.

According to WO-A-2003025046 the components are mixed together and heated in a mixing machine such as a twin screw extruder, a single screw extruder, a two roll mill, or, preferably, a Farrel Compact Processor™ machine (a type of compounder), a Banbury mixer, or any suitable mixer. According to WO-A-2003025046 it is advantageous to keep the entrance into the mixer relatively cool in order to avoid softening the waste print powder (which softening begins at about 90°C). The advantage of using a Banbury or Farrel machine is that mixing of the components is more thorough and the entrance temperature is not so critical.

The mixing efficiency of continuous processors such as single and twin screw extruders depends on the type of screw element used. It is generally recognized that the basic single screw extruder and the fully-flighted sections of the fully intermeshing co-rotating twin screw extruders are not efficient mixers, in contrast to the specialized mixing elements such as the kneading discs used in co-rotating twin screw extruders

("mechanisms of Mixing in Single and Co-Rotating Twin Screw Extruders", Adeniyi Lawal and Dilhan M. Kalyon, Polymer Engineering and Science, Mid-September 1995, vol.35, NO. 17). The basic mixing element in a single screw extruder is the fully flighted screw element that rotates in a stationary and thermostatically controlled barrel, which melts, mixes, pressurizes, and devolatilizes the ingredients of the formulation. To enhance mixing in single screw extruders, pins or vanes may be incorporated into the design. Twin screw extruders, which may be co- or counter-rotating screws are generally built as modular mixers. The type of mixing element and their sequence is chosen to satisfy a particular mixing task. A typical example of a twin extruder is the fully intermeshing co-rotating twin screw extruder, which has the advantage of being self-wiping. The screw elements of a twin extruder may typically include both fully flighted screw sections and kneading discs. The screw sections are used in melting, melt conveying, and pressurization, and for distributive mixing where components of a formulation are interspersed in each other without altering physical properties. Kneading discs are typically used especially for dispersive mixing tasks requiring high shearing stresses and narrow gaps to alter the physical properties including the particle size distribution of the ingredients and the better distributive mixing. In the co-rotating twin screw extrusion process, several pairs of kneading discs can be mounted on two parallel co-rotating shafts and can be staggered at various angles in the axial direction. All of the screw elements can be staggered in the forward or reverse directions depending on the requirements of the mixing process.

Since twin screw extruders are generally modular in terms of both the screws and the barrel there are countless process configurations that are possible. However whether the screw rotation is co-rotating or counter rotating the extruder performs the same basic tasks of feeding, melting, mixing, venting, and developing die/localised pressure. There are three basic families of screw elements, flighted, mixing, and zoning. Flighted elements feed and forward material past barrel ports, through mixers and out of the die. Mixers can be dispersive or distributive, depending on the amount of elongation acceleration, or shear, versus the number of melt divisions in the design. Zoning elements isolate two operations within the extruder, such as for providing a venting seal.

Venting, whether opening the barrel vent port to the atmosphere or drawing a vacuum, is used to remove air, moisture, and or volatiles prior to the die. The vent port is normally at least one barrel section from the extruder end. If the die pressure is too high the screw flights will fill with polymer back to the vent port. In intermeshing extruders a melt seal is designed into the screw configuration prior to the vent, followed by large pitch elements under the vent port to provide the surface area and the low melt pressure. The melt seal provides a high-pressure drop prior to the vent to assist devolatilization. Melt seal can be created by rearward conveying elements (whether conveying or kneading blocks). Melt seals are normally used before each vent port or downstream feed port.

During any melt formation process, the vast majority of the entrained air is excluded from the melt. During a continuous melting process such as extrusion, this air can take two alternative routes out of the extruder barrel. The air excluded during the densification and melting process is either pushed back along the barrel towards the feed port of the extruder, or the air is allowed to pass through the melting zone of the barrel and released at a downstream vent port. The former situation can cause two issues: progressive aeration of the powder being conveyed along the extruder barrel, leading to a volumetric flow limitation in the feeding zone of the extruder; and also back flow of air from the melting zone may cause the toner in the barrel to melt or soften up before the melting zone causing the barrel to block or reduce the volumetric flow. The same problems can occur using single screw reciprocating kneaders and co-kneaders, such as those manufactured by Buss Corp.

WO-A-2005054344 relates to a process for preparing a masterbatch, the process comprising compacting a feedstock into pellets, wherein the feedstock comprises waste toner powder. The masterbatch may be used in a method for colouring a thermoplastic polymer, the method comprising melt mixing the thermoplastic polymer with the masterbatch. The invention further relates to a masterbatch in the form of pellets comprising greater than 80 weight percent of waste toner powder. According to WO-A-2005054344 the feedstock is compacted using a pellet mill, a paste or powder extruder and a roll compactor. Whilst WO-A-2005054344 contemplates the feedstock consisting essentially of waste toner powder, the feedstock may also include lubricant, binder and/ or a dampening agent (up to 20 weight% each) and up to 10 weight% of an aid scavenger. WO-A-2005054344 discloses subjecting waste toner powder to a sieving or other fragment separating process prior to compaction to remove metal, plastic or other impurities.

The present inventors found that trials with a kneader that the yield was too low; it was thought that there was too much fine dust such that the particle size of waste toner varied too much for kneader to effectively compact. It was not possible to get an appropriate throughput and also achieve compaction. IN experiments there was too much pressure causing back fill. Buss co-kneader had no vents therefore the air extruded during melted traveled back down the barrel causing the toner to melt and block the barrel.

Carrier polymers are used in producing masterbatch granules for various reasons. Colour may be added to the carrier polymer to make the masterbatch. Colorant used to produce masterbatch can be liquid or powders. These are difficult to make into granules. For example carbon black powder cannot be melted and is difficult to compact together. Process of making Liquid dyes into solid granules is difficult and expensive. The best way to overcome these issues is to have a polymer carrier which is melted and the colorant dispersed into it. The use of a polymer carrier provides the following:
1. Ability to pelletize to any size required;
2. Allows means to control colour strength of masterbatch;
3. Processing compatibility, i.e. can be used with polymers with any melt flow index; and
4. Strengthen Structural/mechanical integrity of granules, to withstand handling and transport

Waste toner is a low bulk density powder, with a significant tendency to aerate. This property can cause issues in processing requiring careful control of venting.

### SUMMARY

The invention provides a method of manufacturing a masterbatch comprising, receiving a powder as a raw material including waste toner powder; feeding the powder to a vented-twin screw extruder, having predominantly conveying zones between the feed port and the die; melting and extruding the powder to form an extrudate; pelletizing the extrudate to the required pellet size.

The twin screw extruder may have no more than 30% of the effective barrel length as mixing zones or kneading zones. The twin screw extruder may have at least 70% of the effective barrel length of the screws are formed by conveying zones.

The powder raw material may be fed into the extruder via a side feeder.

The powder raw material may be subjected to mixing before being fed to the extruder. The waste toner powder material may be sieved before performing shear mixing to remove at least developer from the powder.

The powder material may comprise at least 95% waste toner powder. Whilst 100% waste toner powder is envisaged, it might be desirable in certain circumstances to add, for example up to 5% carbon black from non-waste sources. Other non-waste sources could provide powder material, but it is envisaged that at least 90% of the powder would be from waste sources.

The waste toner powder may include waste toner powder from different sources. The waste toner powder may include at least two of, toner plant waste from the toner manufacturing process, supply waste from used toner cartridges, filling waste from bottle filling, and toner market return waste from unused toner residue in toner bottles and machine waste or any other toner waste returned from the from the toner market. At least one of the waste toner powder sources may be a source of black waste toner. At least one of the waste toner sources may comprise a mix of different coloured toner powders.

The method may comprise supplying a measured amount of the toner powder from at least one source. The toner from each source may be combined in measured quantities of each of the sources provided, whereby the relative amounts of toner powder from each source is controlled.

Degasification of the melt material may be allowed by means of a vent port between the melt zone and extruder discharge.

The invention also provides manufacturing a masterbatch in accordance with the above method and comprising a vented-twin screw extruder.

The invention further provides the use of a high shear mixer for production of a masterbatch from waste toner powder.

The invention also provides a method of manufacturing a masterbatch comprising, receiving waste toner powder from at least two sources; adding a measured amount of powder from at least one source to an amount of powder from another source to provide a mixed source powder; subjecting the combined powder to one of a compacting procedure and a melt formation procedure.

The waste toner powder material may be sieved before performing shear mixing to remove at least developer from the powder.

At least one of the waste toner sources may be a source of black waste toner. At least one of the waste toner sources may comprise a mix of different coloured toner powders. Thee waste toner powder sources may include at least two of, toner plant waste from the toner manufacturing process, supply waste from used toner cartridges, filling waste from bottle filling, and toner market return waste from unused toner residue in toner bottles and machine waste or any other toner waste returned from the from the toner market.

The toner powder from each source may be combined in measured quantities of each of the sources provided, whereby the relative amounts of toner powder from each source is controlled.

The powder material may comprise waste toner powder. The waste toner powder material may be sieved before performing shear mixing to remove at least developer from the powder. The powder material may comprise at least 90% waste toner powder. The powder material may comprise at least 95% waste toner powder. Whilst 100% waste toner powder is considered as usual for the invention, it might be desirable in certain circumstances to add, for example up to 5% carbon black from non-waste sources. Other non-waste sources could provide powder material, but it is envisaged that at least 90% of the powder would be from waste sources. The powder material may be derived from 100% waste toner powder, not including impurities.

The compacting procedure may be performed in a high shear mixer. The melt formation procedure is performed in an extruder, such as a twin-screw extruder.

The invention further provides a method of manufacturing a masterbatch comprising, receiving powder material and a binder material in a shear mixer and mixing, performing a shear mixing process at least until micro granules begin forming in the powder binder mixture, retaining the mixture in the shear mixer for a period of time to allow granule growth, and drying the granules.

The powder material may comprise waste toner powder. The waste toner powder material may be sieved before performing shear mixing to remove at least developer from the powder. The powder material may comprise at least 90% waste toner powder. The powder material may comprise at least 95% waste toner powder. Whilst 100% waste toner powder is considered as usual for the invention, it might be desirable in certain circumstances to add, for example up to 5% carbon black from non-waste sources. Other non-waste sources could provide powder material, but it is envisaged that at least 90% of the powder would be from waste sources.

The waste toner powder may include waste toner powder from different sources. The waste toner powder may include at least two of, toner plant waste from the toner manufacturing process, supply waste from used toner cartridges, filling waste from bottle filling, and toner market return waste from unused toner residue in toner bottles and machine waste or any other toner waste returned from the from the toner market.

At least one of the waste toner sources may be a source of black waste toner. At least one of the waste toner sources may comprise a mix of different coloured toner powders.

The method may comprise supplying a measured amount of the toner powder from at least one source. The toner from each source may be combined in measured quantities of each of the sources provided, whereby the relative amounts of toner powder from each source is controlled.

The drying may comprise drying in the shear mixer.

The binder may be an aqueous binder.

The vessel temperature of the shear mixture may be set to be no more than the melting point of the input powder material.

The invention also provides apparatus for manufacturing a masterbatch in accordance with the above method and comprising a high shear mixer.

The invention also provides the use of a high shear mixer for production of a masterbatch from waste toner powder.

### BRIEF DESCRIPTION OF THE DRAWINGS

Figure 1 is a schematic representing the system and process of a manufacturing process incorporating apparatus and a method in accordance with a first aspect of the present invention;
Figure 2 is a schematic representing the system and process of a manufacturing process incorporating apparatus and a method in accordance with a second aspect of the present invention;
Figure 3A and 3B show exemplary results for a specific test set up for the a process using a high shear mixer.

### DETAILED DESCRIPTION

In a first aspect the invention provides the use of a high shear mixer in the preparation of masterbatch, for use in colouring plastics and polymer materials, from waste toner. The raw waste toner powder is subjected to granulation in a high shear mixer with an appropriate binder.

In a second aspect the invention provides the use of a twin extruder in the preparation of masterbatch, for use in colouring plastics and polymer materials, from waste toner. The raw waste toner powder is subjected to extrusion and then pelletisation or granulation.

As mentioned above, established practise for a masterbatch is to use a carrier polymer. In the present invention the waste toner is the colorant and it can be made into chips/granules without a polymer carrier.

The techniques of the invention allow to convert powder having a particle size typically in the range of 5 to 15 microns into dust free pellets between 1 and 10mm, optionally 3-4mm or whatever size is requested by a customer.

Various ways to make toner granules greater then 1mm in size were investigated. These processes included extrusion (in particular a Rondol 21 mm twin screw extruder), compacting (in particular a Hosokawa Compactor), kneading (e.g. an EF kneader or a Buss Co-Kneader), and high shear mixing in a high shear mixer (e.g. a Eirich high intensive mixer).

Of the above processes the most successful process to make the masterbatch was narrowed down to the high shear mixing and the twin screw extruder process. The success of the above processes was measured in the following categories:
- Ability to make granules to specific size (as requested by costumers) between 1-10mm.
- Structural strength of granules
- Process yield
- Operating cost
- Operational lead time
- Flexibility
- Return on capital investment
- Safety

In particular the use of a compactor or kneader, generally had a low yield, insufficient structural strength, higher operating costs, higher lead times, were less flexible in terms of operating parameters, and at least in the case of the compactor, the high incidence of fine powder meant that there were safety issues in terms of recycling the fines for further re-use.

The present invention allows the use of a mix of waste toner sources with 100% waste toner in order to make a masterbatch for use as a colourant for plastics and polymers. There is no need to use a precursor polymer or carrier for the masterbatch. Thus the masterbatch is not polymer specific giving greater flexibility.

A feature of the present invention is that waste toner from various sources is mixed in carefully controlled proportions to provide, in the case of a black masterbatch sufficient jetting, and in the case of a colour masterbatch the colour can be controlled in advance by careful formulation of the sources of waste toner

A black masterbatch can be manufactured from starting materials including waste toner having all colours not just black waste toner. Allowing a minimum amount of black waste toner to be used and thereby allowing recycling of as much waste toner as possible from all sources.

Whilst carbon black can be added to the formulation to ensure sufficient jetting, instead the proportion of black waste toner can simply be increased if necessary.

In some applications it is desirable to have a moisture content below 1%, which can be achieved by the present invention, or the product can be produced having a moisture content to the client's requirements.

Embodiments of the invention are described in terms of the use of waste toner and it is desirable to use 100% waste toner. In any case, masterbatch comprising 99% waste toner can be achieved by the techniques of the invention. Of course, the toner does not have to be "waste" toner and the techniques of the invention could be practised with non-waste toner powder or a proportion could be replaced by, for example, carbon black, which may or may not be recycled from some other use.

### Extruder Process

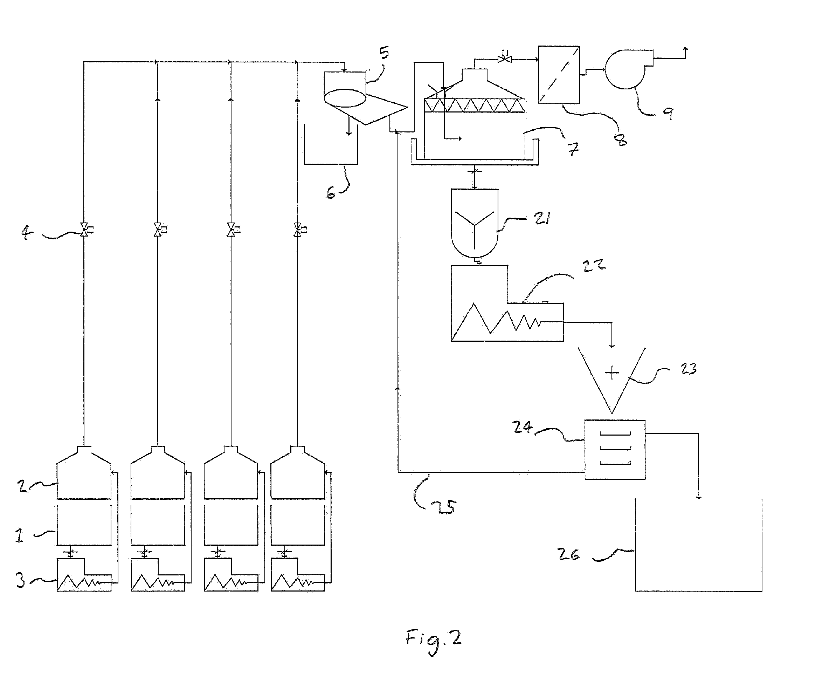

The second aspect of the invention will be described with reference to figure 2 which is a schematic of the apparatus and process flow for producing the masterbatch using an extrusion process. The basic steps of the process may include:
➢ Toners from pallets are weighed in the weighing scale as required by in house formulation.
➢ Developer is removed from the toner
➢ Different toners are mixed according to in house developed formulation
➢ Mixed toner is fed into the extruder for compacting
➢ The toner is melted and extruded
➢ The extruded toner is granulated/pelletized into the granule size required
➢ Granules sieved to remove out of specification granules
➢ Granules cooled and packaged

Experiments with the kneader showed that a masterbatch product could be obtained from waste toner powder (without any polymer carrier) simply by agglomerating or melt forming the powder and pelletizing. However, the throughput in the kneader was insufficient to scale up the production process. It was deemed that an extrusion process would provide the necessary conveying capability to provide a commercially useful throughput. Extrusion machines are generally set up with conveying and mixing zones to achieve the necessary distributive mixing of the input materials. Using waste toner powder as the input material it was deemed that the use of mixing zones would be unnecessary. Furthermore, in view of the nature of the powder input material it was deemed that a vented extrusion device would be advantageous to provide sufficient degasification of the melt product. Since the waste toner powder in the present embodiment are provided from different that are subsequently mixed to form a mixed source waste toner powder, no further mixing is required in the extruder itself.

During a continuous melting process such as extrusion, it is necessary to vent any entrained gases from the material during processing. As mentioned, air can take two alternative routes out of the extruder barrel. The air excluded during the densification and melting process is either pushed back along the barrel towards the feed port of the extruder, or the air is allowed to pass through the melting zone of the barrel and released at a downstream vent port. It is, therefore, desirable to promote venting forwards through the venting zone rather than back towards the feed port of the extruder. In particular it is desirable to avoid a loss in conveying efficiency.

For this reason a twin screw extruder was selected as this allowed more flexibility with regard to the design of the screw. The use of a twin screw extruder provides an increased flow rate over a single screw extruder.

In an embodiment the extruder barrel was heated to 110ºC. The powder was fed into the extruder barrel via a side feeder rather than using the normal gravity feeder. Thus the powder material was fed in at a more constant feed rate, with better control and reduced aeration. The feed is at a higher pressure than would be the case for a gravity feeder and the barrel is above the melting point of the powder raw material at the point of feeding. Side feeders are normally used to feed additives into a plastic raw material which would be fed in upstream by a gravity feeder.

The toner is mixed and pushed down the barrel. The heat causes the toner to melt and stick together. It is then extruded and can be pelletized while molten, or cooled and granulated.

In an embodiment a formulation of waste toner powders from different sources is weighed out and supplied to the Blower/sifter 5 as described above. The formulation consisted of Supply waste 61.1%, Toner Plant waste 22.2%, Filling waste 14.4%, Machine waste 2.3%. The raw toner powder received from the blower/ sifter 5 by hopper 7 is supplied in a weighed amount to a mixer 21 to ensure the powder is properly mixed before being supplied to the extruder 22. Since the waste toner powder in the embodiment comes from different sources having different colour components and different bulk densities it is important to ensure that a uniform raw material is supplied to the extruder 22.

The conditions used in an embodiment are shown below. These gave a process mass flow rate of 4.5kg/h. A scaled up process would use different parameters that can be determined by the skilled person without the exercise of any inventive capacity. It is envisaged that the process will be scaled up to have a mass flow rate of 120kg/h.

The process parameters for a 21 mm extruder and flow rate of 4.5Kg/h were:
- Temperature: 110°C
- The effective barrel was fitted only with conveying screws
- Barrel processing length 23D, Side feed into 18D
- Vented twin extruder to let any remaining air out.

The venting appears to be an important feature and both air and vacuum devolatilisation systems could be used to achieve proper venting. In an embodiment the barrel was extruded proximate the feed input (downstream) to vent any air entrained on supply through the feed port. A further vent port between the melt zone and the extruder discharge provides venting of any gases entrained in the supplied powder product.

Since during extrusion, entrained gases may be excluded during the densification and melting process either back along the barrel towards the feed port of the extruder, or the gases must be able to pass through the melting zone of the barrel and released at a downstream vent port. The former situation causes progressive aeration and heating of the powder being conveyed along the extruder barrel leading to a volumetric flow limitation in the feeding zone of the extruder. It has been found that limiting the number of kneading paddles, or in other words the length of the kneading zones to an absolute minimum allows the released gases to be vented forward by passing through the melting zone. There may be only one kneading zone, preferably no more than two kneading zones and the length of the of each kneading zone should not be more than 1 diameter, or the total length of kneading zones should not be more than 2 diameters.

The drying system 20 is not required for the extruder method. The extruded material is instead supplied to a pelletiser/ Granulator 23 for sizing the extruded mass into the required granule size, typically between 1 and 10mm. Optionally the pelletized product can be sieved in a sieve 24 to ensure uniformity of the granules. Any fines can be recirculated back to the hopper 7 for extruding thereby minimising waste. A line 25 is provided for recirculating the fines.

The sieved product is supplied to pallet 26 for use in manufacture of a master batch. The extruded product, unlike the product produced by the high shear mixer is melted and the particles are fused together. Thus, no binder is required with consequent costs savings and simplification of the process parameters, that is, there may be fewer factors to consider in determining the optimum parameters for the extrusion process. Furthermore, the extruded pellets may have greater structural integrity and the pellet size may be more consistent and more easily controlled.

### Examples

A twin screw extruder was set up with a lateral side feeder for metering, rather than the usual gravity volumetric feed. It is thought that this set up reduces the aeration of the premix on entry into the extruder. In an embodiment the side feeder was located at 18 diameters (18D) from the upstream end (extruder barrels are generally measured in terms of the number of diameters), thus making the effective barrel length 23D for a 40D barrel.

A Rondol 21 mm twin screw extruder was used in the present embodiment. The extruder is a clamshell barrel with interchangeable segmented screws that can be configured to specific applications by selecting various kneading, mixing and shear screw elements. The barrel processing length and the location of the feed can be selected to provide optimum results. Various screw configurations were explored. In an embodiment a screw configuration was fitted with 24 kneading paddles, configured with 12x30 and 12x60 forwarding angles to promote conveying. The output was feed limited at a screw speed of 500kg/h. A 5 minute sample was taken in order to measure the output, which in this case was 160g, corresponding to a mass flow rate of approximately 1.9kg/h. For this set up, it could be determined by opening a venting point proximate the feed port, that unwanted venting of gases was occurring in the direction of the feed port. As a consequence, increasing the screw speeds gave relatively minor increases in the mass flow rates or feed limit. Furthermore the barrel temperature did not appear to be determinative meaning the build of entrained gases was the most likely reason for poor flow rate.

A series of screw designs were then trialled in an attempt to reach a mixing intensity which would allow the entrained gases to pass through the mixing section; principally by reducing the number of mixing paddles and increasing the forwarding action of the paddles. These changes did not decisively improve the output limit.

A screw design including only twin conveying screws provided an output of 4.5kg/h, after an initial 1 minute period where the powder had not properly melted. It is assumed in this case that more air was being vented forward of the melting zone, between the melting zone and the outlet. Addition of downstream venting port (between the melting zone and the extruder discharge) allowed toner to be extruded as a strand and prevented any initial failure to fully melt the powder input material. In this final trial the additional venting port was preceded by a short mixing zone.

### High shear mixing Process

In an embodiment the process for forming a master batch includes the following process steps.
➢ Toners from pallets are weighed in the weighing scale as required by in-house formulation.
➢ Developer is removed from the toner
➢ Different toners are mixed according to in-house developed formulation
➢ Mixed toner is fed into the shear mixer
➢ Binder solution add to the mix toner in the shear mixer
➢ Shear mixer is run with best condition identified by Taguchi experiments
➢ Once the granules are produced they are dried and packaged

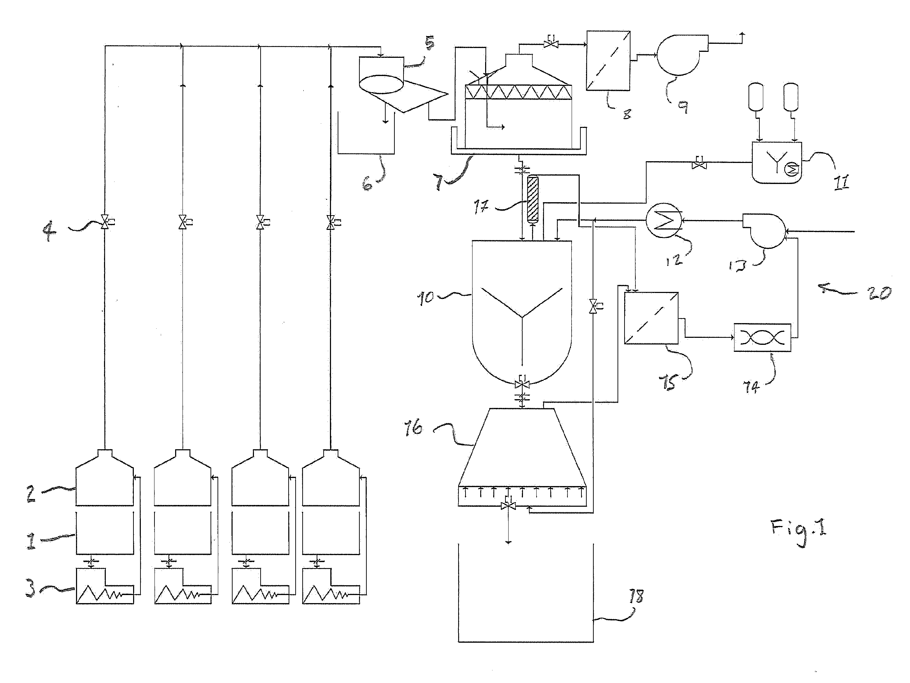

Figure 1 shows a schematic of the apparatus and process flow for producing the masterbatch using the high shear mixing process. Figure 1 will now be described together with a specific and entirely exemplary example of one process for forming a master batch according to the invention.

The various sources of waste toner are provided from pallets 1 to weigh scales 2 by feeders 3. The proportions of waste toner may by this means be carefully controlled if required as discussed below. One example uses proportions as follows: Supply waste known as All In One (AIO), which includes all four colours (Black, cyan, magenta, yellow) 61.1%, Toner Plant waste (TP) 22.2%, Filling waste (RP3) - three or four colours, i.e. with or without black) 14.4%, machine waste (all four colours) 2.3%.

Toner plant waste, for the supply available to the inventors, is the only waste that is 100% black; 22.2% was deemed to be the lowest amount of 100% black to give sufficient colour density (black) in the final product. Lower proportions of 100% black toner powder could be used with consequent effects on the colour density. The proportion of 100% black waste toner powder could be reduced by replacing with carbon black from another source including as a waste product from another process.

The AIO waste will be lump sum of different types of toner from the supply waste area (colour and black), Filling waste will be lump sum of different type of toner from the bottle filling area (colour and black), The machine waste will be mixed waste toner, and TP will be 100% black waste. How much toner powder from each source is used may vary depending on the colour strength required.

The proportion of toner plant waste was kept to a minimum to keep back 100% black waste in hand in case there was an oversupply of mixed waste in subsequent cycles.

The raw waste toner is then fed by valves 4 to a blower/sifter 5 for removing the carrier/ developer. Various types of sifters, sieves and cyclones can be used to separate the developer from the toner. The sieving process removes anything that is not within a size specification. Once separated the developer/carrier held in tank 6 and can be reused, see co-pending, unpublished patent application number EP12198691.3. The sieved toner provides a starting material with fewer foreign bodies and that is less magnetic.

The waste toner powder is transferred to a hopper 7 for a shear mixer 10. The hopper 7 includes a weighing scale and a bag filter to prevent loss of powder. A blower 9 protected by filter 8 drives the process of delivery from the weigh scales 2 to hopper 7 via blower/ sifter 5 as controlled by valves 4.

From the hopper 7 a measured load of waste toner powder can be delivered to a shear mixer 10, such as an Eirich high intensive mixer model R01/RV01.

After mixing and heating the waste toner powder in the shear mixer 10 to about 55°C (40-60, less than point at which some melting occurs, above useful yield point) a binder is added. In the embodiment binder solution is added at 53% of total weight of the waste toner material. In this embodiment the binder is a mixture of water and potato starch (1.75 wt%) which can be mixed in a mixer 11. After briefly allowing the particles of toner to mix with the binder the rotor speed of the high shear mixer 10 is increased to perform high shear mixing, which is performed until micro granules (wet looking granules of approximately 0.5mm appear). Shear mixing removes the air, wets the toner particles and forms the micro-granules. Once micro-granules have formed, or once the granule formation has finished, the rotor speed is reduced somewhat to allow granule growth. Once the granules have reached the required size the rotor speed is reduced again and may be stopped while the mixture is dried in the high shear mixer (in-line drying) by hot air supplied from a hot air system 20, which in the embodiment includes a heater 12, a blower 13, a dehumidifier 14 and a filter 15.

The in-line drying process is thought to be beneficial because it provides sufficient strength to the granules for the transfer process.

After drying the surface of the granules in the in-line drying step the master batch is transferred to a dryer 16, typically a fluidised bed dryer for approximately 12 minutes or sufficient time for the powder to dry and stabilise.

The same hot air system 20 can supply both the shear mixer 10 and the dryer 16. Alternatively, the shear mixer 10 and dryer 16 can be heated independently. In the present case hot air from each of the shear mixer 10 and dryer 16 are recycled via filter 15 of the hot air system 20. In the case of air from the shear mixer this is pre-filtered by sock filter 17.

Once dry the product is dispensed to product pallet 18.

Trials were carried out using an EIRICH HIGH INTENSIVE MIXER model R01/RV01. Other Eirich High intensive mixers type "R" can be used for this process, they include R02, R02E, RV02E, R02VAC, R05T, R08, R08W, RO8VAC, RO9, R09W, R09T, RV11VAC, R12, RV12, R12W, R15, RV15, RV15VAC, R16, RV16, R19, RV19VAC, RV23VAC, R24, RV24, RV29VAC, RV32, RV32VAC. Alternative high shear mixers/ granulators, including those from other manufacturers, can be used. Preferably the high shear mixer will have the following characteristics:
- Rotating mixing pan
- Inclinable Pan
- Rotating mixer tool (various designs)
- Adjustable multi-purpose wall-bottom scraper

The following parameters were considered during development: Process Time, Revolutions/Speed, Mixing Principle (Angle of pan), Binder type, Binder Amount, Drying Temperature, Drying time, Loading, Rotor Type, Vessel Temperature, and Shearing speed.

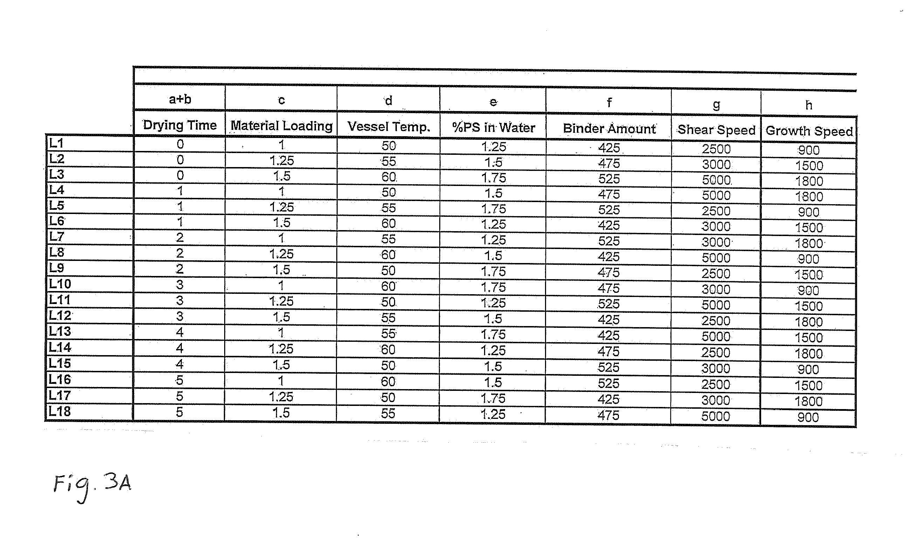

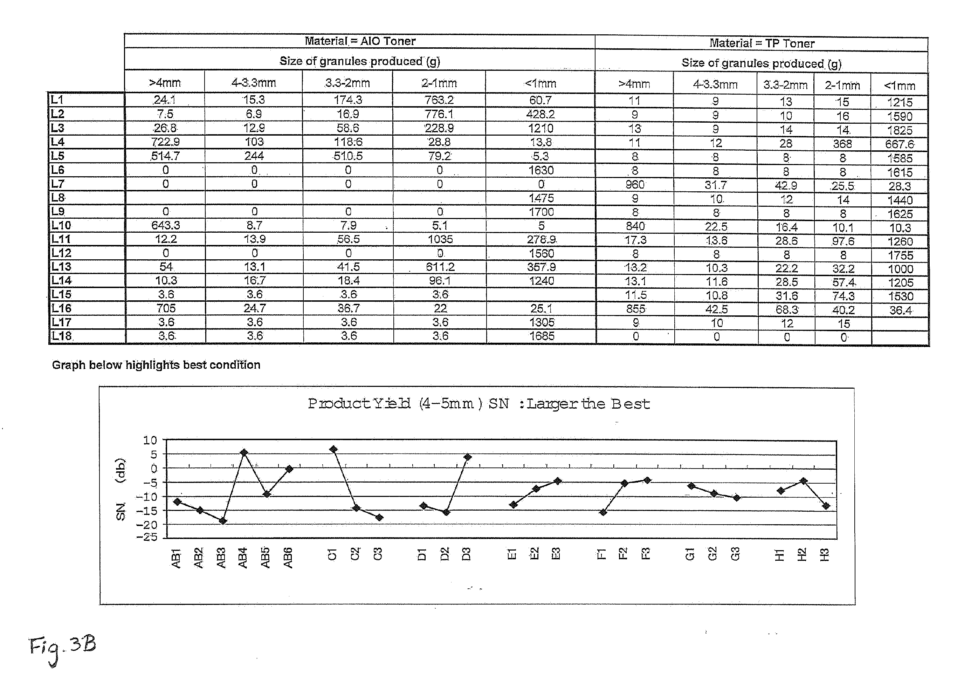

Figure 3A and 3B show exemplary results on which for a specific test set up a most promising combination of test parameters can be determined. A series of test L1 to L18 were performed on two different materials: an AIO waste toner powder mixture and a Toner plant waste toner powder. The same test parameters were used for each material. Figure 3A details the combination of parameters for each test (L). The parameters chosen and the range of parameters were chosen based on the perceived uncertainty as to the probable optimum value. Thus, for drying time, six options were chosen over a range from zero to 5 minutes, whereas for vessel temperature only three values have been chosen from 50 to 60°C, since it was assumed that a temperature close to, but below the melting point would be desirable. A single mixer pan angle of 30° was used for all tests. It should be noted that whilst any particular combination might produce a negative result, this does not mean that the combination is necessarily outside a workable range because other factors including the starting material must also be taken into account.

Using the Tamaguchi method it was determined that the most promising combination for the particular set up used for the tests was a pan angle of 30 degrees, a vessel temperature of 60°C, a percentage of potato starch in water of 1.75%, 525g of binder per kg of toner powder, 1 Kg of powder per load, a shearing speed of 2500m/s, a revolution speed of 1500m/s during granule growth, and a drying time of 3 minutes. These factors contributed to better yields, bigger granules and faster granule growth.

One of the key controlling factors appears to be the amount of binder solution added. The amount of binder required appears be related to the density of the toner powder being processed. The lower the density of toner powder, the larger the volume it occupies and the more the binder solution required. Too much binder solution and the result is a lump, that is the powder does not pelletize properly, too little binder and the powder does not agglomerate.

One of the factors controlling the difference in the results for AIO and TP is the difference densities of the powders. The density for the AIO used was approximately 700kg/m3 and fro the TP was approximately 500kg/m3. The difference is significant and has a consequent effect on the amount of binder required. For example, the amount of binder solution added in test L7 is very close to optimum for TP, but it was too much for the AIO which left one big lump and run was classes as a "fail".

In run L16, the conditions are quite similar to that of R7. But this run works for AIO and TP. This is because the binder solution is much thicker (higher % of binder) then in L7.

The Taguchi method was used since all the control factors affect each other, and the technique provides a method for determining optimum conditions for each factor, without having to work out which condition is having what effect. The "optimum" conditions can then be tested for a particular formulation to see if the desired results are obtained and if they are repeatable.

A summary of the results of figure 3B is shown in table 1 below

Table 1 below shows exemplary ranges of the above parameters that were tested:

**Table 1**

| **Control Factor** | | | **Level 1** | **Level 2** | **Level** 3 |
|---|---|---|---|---|---|
| 1 | Mixing Principle (Angle of pan) (degree) | | 30 | 0 | |
| 2 | Revolution Speed (m/s) for granule growth | | 900 | 1500 | 1800 |
| 3 | Potato Starch % in Water | | 1.25 | 1.5 | 1.75 |
| 4 | Binder Amount g/Kg | | 425 | 475 | 525 |
| 5 | Drying Time (Setting) - in line | | 1.5 | 3 | 4.5 |
| 6 | Material Amount/Loading (Kg) | | 1 | 1.25 | 1.5 |
| 7 | Vessel Temperature ( °C) | | 50 | 55 | 60 |
| 8 | Shearing Speed (m/s) | | 2500 | 3000 | 5000 |

The vessel temperature can vary between 40 and 60 °C. Lower than 40 °C does not give sufficient yield of consistent yield, and above 60°C melting of the toner is liable to begin, which is to be avoided. Setting a vessel temperature of between 50 and 60 °C may give a good balance between an ideal temperature and control of the heating process. A range of 55 to 60°C has given consistently good yields.

For an aqueous binder, the desired proportion of binder will vary depending on the choice of binder and other factors and the skilled person will be able to determine by trial and error a preferred binder (which may depend on local costs and availability), the amount of binder in a carrier (e.g. water) if present, and the amount of binder per load of raw powder.

The blade speed for the shearing (high shear) process will again depend on various factors including the scale of the process and the viscosity of the powder /binder mix. The object is to achieve wetting of the powder particles and granule formation. Surprisingly, good results were obtained at relatively low blade speeds in the specific embodiment. However, the particular blade speed for any specific set up can be determined by trial and error.

Similarly the time and blade speed for promoting granule growth is not an exact science but till generally be in the region of 900 to 2500 m/s.

Whilst in-line drying is not essential, the process did give benefits in relation to short term stability for transfer to the dryer, preventing breakup of the newly formed granules.

For the process described above in relation to figure 1, the following exemplary timings were used in a specific example.

**Table 2**

| **Steps** | **Rotor speed (rpm)** | **Pan speed setting** | **Time (min)** |
|---|---|---|---|
| Heat to 55C | 900 | 2 | 7 |
| Add binder solution | 900 | 2 | 0.5 |
| Mix | 900 | 2 | 1 |
| Shear mix | 2500 | 2 | 3 |
| Granule growth | 1500 | 2 | 2 |
| Inline drying 0/2 | 0 | 2 | 3 |
| Fluidised bed dryer (°C) | - | - | 12 |
| Total time | | | **28.5** |

Table 2 gives exemplary timings for a specific example. None of the timings are individually crucial so long as the rotor speed relative to the pan and the time for each step of the process is sufficient to achieve the desired result in each case. It will be evident that the times for shear mixing and granule growth can be dependent on material load, binder solution amount, and binder strength. The timings will depend in part on the apparatus used, the size of granule desired. In this case the R01/RV01 was used.

Binders can be classified into 4 types;
- Matrix binders (solid or semi-solid binder) i.e. tar, pitch, asphalt, wax, cement, bentonite, corn starch etc.
- Film binder (liquid binders) i.e. water, silicate, gels, alcohol, clay, Starch etc.
- Chemical binders i.e. Silicate, acids, molasses, lime, etc.
- Lubricant binder i.e. Oil, Glycerine, Stearate, Wax, etc.

Binders can also be classified as organic/inorganic and hydrophilic/hydrophobic.
➢ We have tested Wax which is classified as matrix binder/inorganic/hydrophobic.
➢ We have tested water and starch which is a film binder/organic/hydrophilic.
➢ We have tested molasses which is classified as chemical binder/hydrophilic/organic.
➢ We have tested PVA which is classified as chemical binder/hydrophilic/inorganic.

Any of these binders may be used, or any other suitable binder, even water on its own could operate as a binder, although yields are improved with use of any of the well-known binder materials or their equivalents.

In the embodiment described above in relation to figure 1 binder solution is added at 53% of total weight of the waste toner material using a water/ potato starch. The amount of binder required will depend on the binder used and for an aqueous mixture, the % of binder to water, but binder is typically added in the amount of 20% to 80% by weight of the waste toner material, preferably 40 to 60%, most preferably 45 to 55%. It is thought that the amount of binder solution added is directly related the density of the toner powder being processed. Hence the lower the density of toner powder, the larger the volume it occupies and the grater the volume of binder solution required. In the particular test set up used for a toner powder comprising AIO 61.1%, Toner Plant waste 22.2%, Filling waste 14.4%, machine waste 2.3%, the optimum binder solution to be added was calculated as 29.8% of the volume of toner. (For example 1 kg of RPL formulated mix has a volume of 1619.1 ml and therefore the amount of binder solution added is 482.17g).

In terms of the final drying process the inventors have tested each of the following:
Fluidised bed dryer
Continuous shaking fluid bed dryer
Oven

The dryer/ oven typically operates at a temperature of 45°C to 95°C

After determining through the above process a most likely combination of factors (meaning most likely to provide a positive result), tests were then performed on two different formulations of waste toner powder mix:
1. A toner plant/AIO mix (30/70), and
2. AIO 61.1%, Toner Plant waste 22.2%, Filling waste 14.4%, machine waste 2.3%.

Using the test parameters from Tables 1 and 2 (pan angle of 30 degrees, a vessel temperature of 60°C, a percentage of potato starch in water of 1.75%, 525g of binder per kg of toner powder, 1 Kg of powder per load, a shearing speed of 2500m/s, a revolution speed of 1500m/s during granule growth, and a drying time of 3 minutes) the following results were obtained:

**Table 3**

| | Granule weight (g) | | | | | |
|---|---|---|---|---|---|---|
| | >4mm | 4-3.3mm | 3.3-2mm | 2-1 mm | <1mm | Total Sieved |
| TP:AIO Mix | 819.6 | 2.1 | 3.3 | 2.7 | 4.8 | 832.5 |
| RPL Mix | 782 | 25.3 | 17.2 | 11.6 | 6.1 | 842.2 |

The product produced by the high shear process described above comprises agglomerated granules that are not fused together

## Claims

1. A method of manufacturing a masterbatch comprising:
receiving a powder as a raw material including waste toner powder;
feeding the powder to a vented, twin-screw extruder, having predominantly conveying zones between the feed port and the die;
melting and extruding the powder to form an extrudate;
pelletizing the extrudate to the required pellet size.

2. A method as claimed in claim 1, wherein the twin screw extruder has at least 70% of the effective barrel length as conveying zones.

3. A method as claimed in claim 1 or 2, wherein the powder raw material is fed into the extruder via a side feeder.

4. A method as claimed in claim 1, 2, or 3, wherein the powder raw material is subjected to mixing before being fed to the extruder.

5. A method as claimed in any one preceding claim, wherein the waste toner powder material is sieved before performing shear mixing to remove at least developer from the powder.

6. A method as claimed in any one preceding claim, wherein the powder material comprises at least 95% waste toner powder.

7. A method as claimed in any one preceding claim, wherein the waste toner powder includes waste toner powder from different sources.

8. A method as claimed in claim 7, wherein the waste toner powder includes at least two of, toner plant waste from the toner manufacturing process, supply waste from used toner cartridges, filling waste from bottle filling, and toner market return waste from unused toner residue in toner bottles and machine waste or any other toner waste returned from the from the toner market.

9. A method as claimed in claim 7 or 8, wherein at least one of the waste toner sources is a source of black waste toner.

10. A method as claimed in claim 7, 8, or 9, wherein at least one of the waste toner sources comprises a mix of different coloured toner powders.

11. A method as claimed in any one of claims 5 to 8, wherein the method comprises supplying a measured amount of the toner powder from at least one source.

12. A method as claimed in claim 11, wherein the toner from each source is combined in measured quantities of each of the sources provided, whereby the relative amounts of toner powder from each source is controlled.

13. A method as claimed in any one preceding claim, wherein degasification of the melt material is allowed by means of a vent port between the melt zone and extruder discharge.

14. Apparatus for manufacturing a masterbatch in accordance with the method of anyone of claims 1 to 12 and comprising a vented, twin-screw extruder.

15. Use of a high shear mixer for production of a masterbatch from waste toner powder.
